# EUROPEAN PATENT SPECIFICATION

(11) **EP 3 453 208 B1**
(45) Date of publication and mention of the grant of the patent: **18.09.2024**
(21) Application number: 16723173.7
(22) Date of filing: 03.05.2016
(51) Int. Cl.: H04W 64/00, H04W 36/36

(54) **METHODS AND NETWORK NODES FOR PROVIDING UE LOCATION FOR VOWIFI CALLS**
VERFAHREN UND NETZWERKKNOTEN ZUR BEREITSTELLUNG EINES UE-SPEICHERPLATZES FÜR VOWIFI-ANRUFE
PROCÉDÉS ET NOEUDS DE RÉSEAU POUR FOURNIR UN EMPLACEMENT D'UE POUR DES APPELS PAR VOIX SUR WIFI

(43) Date of publication of application: 13.03.2019
(73) Proprietor: Telefonaktiebolaget LM Ericsson (publ), 164 83 Stockholm (SE)
(72) Inventor: ALBASHEIR, Suliman, Issaquah, WA 98027 (US)
(74) Representative: Zacco Sweden AB
(86) International application number: PCT/IB2016/052520
(87) International publication number: WO 2017/191490

(56) References cited:
- EP-A1- 2 413 630
- EP-A1- 3 225 042
- WO-A2-2012/149565
- US-A1- 2013 281 110
- US-A1- 2015 141 043
- US-A1- 2015 365 989
- US-B1- 9 179 436

## Description

### TECHNICAL FIELD

This disclosure relates generally to methods and network nodes for providing User Equipment (UE) location for VoWIFI calls.

### BACKGROUND

Voice over Wireless Fidelity (VoWiFi) is generally a WiFi based Voice over Internet Protocol (VoIP) service. Where VoIP consists of the hardware and software that enable people to use the internet as the transmission medium for telephone calls, VoWIFI is the wireless version of this technology which is designed to work on wireless devices such as laptops, tablets, Personal Digital Assistants (PDA), smartphones, etc.

Several cellular phone companies have already announced dual-mode cellular phones that will support seamless transactions from WiFi to cellular networks and from cellular to WiFi networks. As such, operators can extend voice services to smartphones, tablets, computers and other personal devices through WiFi calling for multi-devices. For example, with WiFi calling, consumers can use their smartphones, tablets and other personal Wi-Fi enabled devices to make regular phone calls using their Subscriber Identity Module (SIM) based mobile phone number. This is beneficial to users that have poor residential cellular coverage, for example. The devices first connect via the WiFi access point in the users' homes and then connect automatically to the network operator provided voice service. Users can also make network operator voice calls at WiFi hotspots across the world. Users can enjoy voice and video calling (if supported by the specific device), and seamless handover of ongoing voice calls is enabled between Long Term Evolution (LTE) and WiFi networks, if the network operator has launched Voice over LTE (VoLTE). As such, VoWIFI allows a UE to switch to WIFI to make voice calls instead of using the cellular network.

US 2015/365989 A1 seems to disclose a system to receive call setup information associated with a call to be received by a terminating device via a particular untrusted wireless local area network (WLAN).

US 9 1794 36 B1 seems to disclose system and method for location reporting in an untrusted network environment using IKEv2 protocol which permits use of appropriate security encryption measures over the SWu interface.
US 2015/365989 A1 discloses a system that may receive call setup information associated with a call to be received by a terminating device via a particular untrusted wireless local area network (WLAN). The system may determine location information, associated with the terminating device, based on receiving the call setup information. The location information may include information that identifies the particular untrusted WLAN to which the terminating device is connected. The system may provide the call setup information to the terminating device via the particular untrusted WLAN. The call setup information may be provided to the terminating device based on the location information associated with the terminating device and may be provided to cause a tunnel to be created.
US 9 179 436 B1 discloses a method including retrieving by a user equipment (UE) an access point (AP) Media Access Control (MAC) address for an AP to which the UE is connected; reporting location information for the UE to an evolved Packet Data Gateway over an SWu interface using Internet Key Exchange version 2 (IKEv2) protocol, wherein the location information includes, at least in part, a UE location in GPS coordinates, a service set identifier, the retrieved AP MAC address and cell identity information for the UE; and populating a location database with the location information.
EP 2 413 630 A1 discloses a wireless network system including a plurality of wireless networks. The wireless network system includes a plurality of mobile devices coupled to the plurality of wireless networks, the plurality of mobile devices including at least a first mobile device and a second mobile device; and an information server coupled to each of the plurality of wireless networks, wherein the information server provides handover messages to the plurality of mobile devices to assist the mobile devices in performing a handover from one of the wireless networks to another one of the wireless networks, wherein the first mobile device negotiates information sharing rules with the information server, and wherein the first mobile device provides, to the second mobile device, shared information according to the information sharing rules.

### SUMMARY

The invention is disclosed according to the independent claims. The subject matter disclosed below in the description and going beyond the scope of the claims should be considered as examples and not embodiments even if words like "embodiment" or "invention" are used in connection thereto. According to a first aspect of the invention, there is provided a method for providing a location of a first User Equipment (UE) in a Voice over Wireless Fidelity (VoWIFI) call. The method comprises: sending a location request to an access point (AP), to which the first UE is attached to; receiving the location of the first UE from the AP, in response to the request; and sending the received location to a network node when establishing the VoWIFI call.

According to a second aspect of the invention, there is provided a first User Equipment (UE) for providing location in a Voice over Wireless Fidelity (VoWIFI) call. The first UE comprises a processing circuitry adapted to cause the first UE to: send a location request to an access point (AP) to which the first UE is attached to; receive the location for the first UE from the AP, in response to the request; and send the received location to a network node when establishing the VoWIFI call.

According to a third aspect of the invention, there is provided a method for providing a location to a first User Equipment (UE) for use in a Voice over Wireless Fidelity (VoWIFI) call. The method comprises: receiving a location request from the first UE; determining the location of the first UE, in response to the received request; and sending the determined location to the first UE, for use when establishing the VoWIFI call.

According to a fourth aspect of the invention, there is provided a network node for providing location to a first User Equipment (UE), for use in a VoWIFI call. The network node comprises a processing circuitry adapted to: receive a location request from the first UE; determine the location of the first UE, in response to the received request; and send the determined location to the first UE, for use when establishing a VoWIFI call.

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 illustrates a schematic diagram of a communication network architecture for providing VoWIFI calls.
Figure 2 illustrates a flowchart of a method for providing a location of the UE for use when establishing a VoWIFI call, according to an embodiment.
Figure 3 illustrates a signal flow for providing a location of a UE after a handover of the UE from the cellular network to the WIFI network.
Figure 4 illustrates a signal flow for sharing a location of the UE with an access point.
Figure 5 illustrates a signal flow of an access point providing a location to an UE.
Figure 6 illustrates a signal flow of a UE providing its location when establishing a VoWIFI call.
Figure 7 illustrates a flowchart of a method for providing a location of a UE after a handover of the UE from the cellular network to the WIFI network.
Figure 8 illustrates a flowchart of a method for providing a location of a UE for use when establishing a VoWIFI call, according to another embodiment.
Figure 9 illustrates a schematic diagram of a device, such as a UE, for carrying out the method of Figure 8, according to one embodiment.
Figure 10 illustrates a schematic diagram of a device for carrying out the method of Figure 8, according to another embodiment.
Figure 11 is a schematic diagram of a network node, such as an access point, for carrying out the method of Figure 2, according to an embodiment.
Figure 12 is a schematic diagram of a network node for carrying out the method of Figure 2, according to another embodiment.

### DETAILED DESCRIPTION

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

As mentioned hereinabove, in current VoWiFi calls, the UE location is not provided to the network. This poses a problem when a UE is placing an emergency (911) call, for example. Any emergency call needs to provide the location of the calling UE. Currently, network operators ask their VoWIFI subscribers to update their address if they want to use the VoWIFI calls, by providing their home address. Since the UE can connect to any available WIFI Access Point (AP) to place VoWIFI calls, continuous update of the home address (for each AP) is not an acceptable solution for providing the UE location in case of an emergency call, for example.

Besides 911 emergency calls, the UE location information can be used for other applications such as: charging, communicating advertisements, traffic gating and policy control.

It should be noted that a UE can be a smartphone, a tablet, a laptop, a communication device, a terminal device, or any devices capable of being connected wirelessly.

Generally stated, embodiments of this disclosure allow a UE, that does not know its location, to provide a location of the UE to the network when establishing a VoWIFI call. To do so, as the UE attaches to an AP, it sends a request to the AP for location. In response to the request, the AP determines a UE location and then sends the determined location to the UE. Once the UE receives the location, it can provide the location to the network when establishing the VoWIFI call.

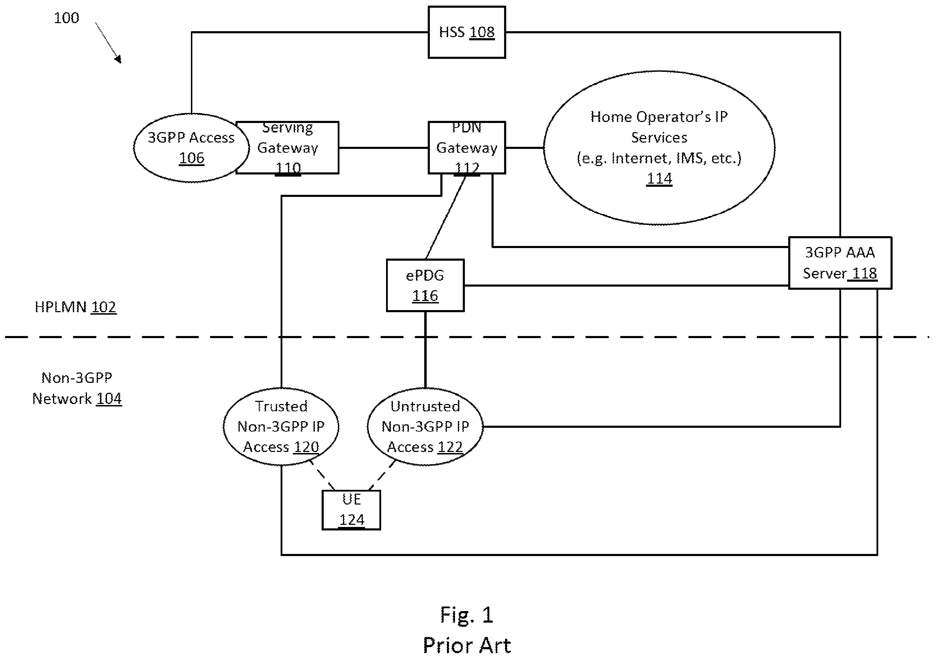

Figure 1 illustrates a communication network architecture 100 for providing VoWIFI calls.

The communication network architecture 100 comprises two networks, a Home Public Land Mobile Network (HPLMN) 102 and a non 3GPP network 104.

The HPLMN 102 is the operator's cellular network, for example. It could be a Global System for Mobile communications (GSM), Code Division Multiple Access (CDMA) or Long Term Evolution (LTE) cellular network. It could be also a 5^{th} Generation (5G) network. Those networks are known in the art and are defined by the 3^{rd} Generation Partnership Project (3GPP). For example, as shown in Figure 1, the HPLMN 102 comprises a 3GPP access 106 for providing UEs 124 access to the core network 109 of the HPLMN 102. The 3GPP access 106 is connected to a HSS 108 and a Serving Gateway 110. The HSS 108 is a database for storing profiles of the users. The Serving Gateway 110 routes and forwards user data packets. The serving gateway 110 is connected to a Packet Data Network (PDN) gateway 112 which provides connectivity from the UEs 124 to an external packet data network, such as internet. As such, the PDN gateway 112 is connected to an operator's IP services network 114, which provides Internet, IP Multimedia Subsystem (IMS) services, etc. An evolved Packet Data Gateway (ePDG) 116 is connected to the PDN gateway 112 and is connected to a 3GPP AAA server 118. The ePDG 116 secures the data transmission with a UE 124 connected to the core network over an untrusted non-3GPP access, such as 122. The Authentication Authorization Accounting (AAA) server 118 provides authentication and identification functions to authenticate and identify UEs 124. Skilled persons in the art may appreciate that the different elements of the communication network 100 are known in the art and that the communication network 100 may have other functionalities as those described above.

The core network 109 can be an Evolved Packet Core (EPC), which comprises, for example, the serving gateway 110, the PDN gateway 112, the ePDG 116 and the HSS 108.

The 3GPP access 106 refers to access technologies specified by the 3GPP. They include GPRS, UMTS, EDGE, HSPA, LTE and LTE Advanced and 5G.

The Non-3GPP network 104 comprises a trusted Non-3GPP IP access 120 and an Untrusted Non-3GPP IP access 122, which are not specified in the 3GPP.

The UEs 124 can access the cellular network 102 through a trusted or non-trusted non-3GPP IP access (120 or 122), with different security mechanisms.

For example, for the trusted access 120, the network operator considers it trustable from a security standpoint, for example, a cdma2000 network is considered to be trustable. As such, trusted non-3GPP accesses can interface directly with the network.

For the non-trusted access 122, the network operator doesn't consider it trustable from a security stand point, for example, a connection over a public WiFi hotspot. Untrusted non-3GPP accesses are connected to the network 102 via the ePDG 116, which provides additional security mechanisms, such as IPsec tunneling. It is up to the network operator to decide whether a non-3GPP access technology is trusted or untrusted.

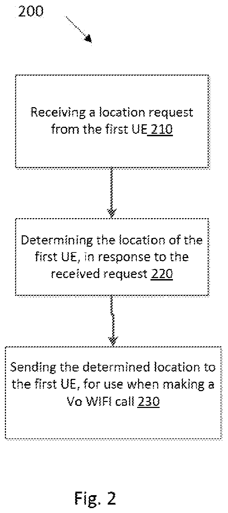

Now, turning to Figure 2, a flowchart of a method 200 for providing a location to a first UE, for use in a VoWIFI call, will be described. The method can be carried out in an access point (AP), for example. Also, it is assumed that the first UE does not have or does not know its location. The first UE can be a tablet, for example, where the tablet does not have a GPS integrated therein or a SIM card, which allows UEs to be serviced by a cellular network, for example. Furthermore, it can be assumed that the user of the tablet is, for example, in a coffee shop, where other users are present as well. Some of the other users may have smartphones (referred to as second UEs, for example) including GPS and/or a SIM card allowing them to be connected to the cellular network.

Method 200 starts with block 210, where method 200 receives a location request from the first UE. For example, the first UE can send a request for location to the AP to which it is connected.

In block 220, method 200 determines a location, in response to the received request.

In block 230, method 200 sends the determined location to the first UE, for use when establishing a VoWIFI call.

In some embodiments, the determination of the location comprises first learning a location from a second UE located in the same area as the first UE, storing the location in a local memory and retrieving it when the location request is received. For example, the AP (that represents the non-trusted access 124) may receive locations of UEs that know their locations (referred to as second UEs), so that it can share these locations with UEs that do not know their locations (referred to as first UEs), the first and second UEs being located within a same area, for example, in the coffee shop.

The second UEs can have knowledge of their location through the use a GPS, for example. If the second UE 124 has a GPS integrated therein, the second UE 124 can obtain its location through the GPS and then stores this information locally in the second UE. Once the second UE 124 attaches to and authenticates with the nearby/detected AP (of the coffee shop), the second UE can send its location to the AP. Then, the AP can share this location with the first UE.

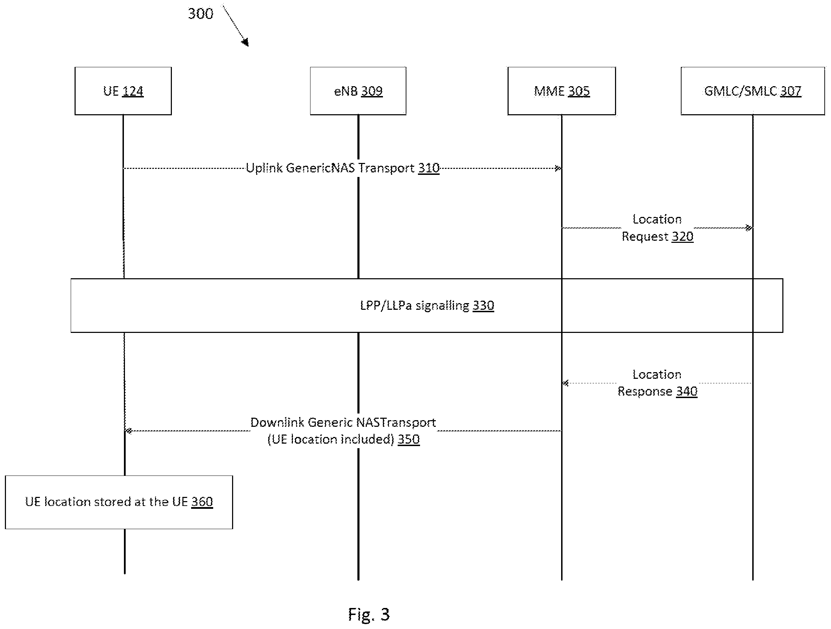

However, some second UEs may not have an integrated GPS, but they may have a connection to the cellular network. As such, they can use the cellular network 102 for obtaining their location. This case is described with reference to Figure 3.

In this case, it is assumed that the second UE 124 has a SIM card, which allows it to be serviced by the cellular network 102. The operations illustrated in Figure 3 are triggered by a handover of the second UE 124 to the WIFI network from the cellular network. The operations can be done in parallel with the handover process. The handover process from the cellular network (such as LTE) and the WIFI network is well-known in the art and as such will not be described further.

After the second UE 124 detects a handover from the cellular network to the WIFI network, the second UE 124 sends a message to the Mobility Management Entity (MME) 205, to request for the location of the second UE, in step 310. In other words, the handover triggers the second UE to send the request message. The request message can be a "uplink generic Non-Access Stratum (NAS) transport" message, for example. Of course, other messages could be used as well to convey the request for location. It should be noted that the MME 305 is a control-node for the LTE access network. For example, it is responsible for authenticating the users, by interacting with the HSS 108 of Figure 1.

In step 320, the MME 305 sends a location request to the Gateway Mobile Location Centre (GMLC)/ Serving Mobile Location Centre (SMLC) 307.

Once the GMLC/SMLC 307 receives the location request, it initiates a communication with the eNodeB (eNB) 309 and UE 124, using the Location Positioning Protocol (LPP), for example, in step 330. It can request for information, such as the strength of the signals, the beam angles, the time of arrival, etc.

Based on the received answers, the GMLC/SMLC 307 determines or calculates a position or location of the second UE. It should be appreciated that the determination of the location of the second UE based on the received answers is well-known in the art. Then, in step 340, the GMLC/SMLC 307 sends the determined location to the MME 205 in a response message.

In step 350, the MME 205 sends a message, called "downlink generic NAS transport", which includes the location of the second UE, to the second UE 124.

In step 360, once the second UE 124 receives the location, it stores it locally in its memory.

Once the second UE 124 has handed over to the WIFI network, it attaches to the nearby/detected AP. For example, after the second UE 124 successfully authenticates with the AP, the second UE 124 sends its location, that it acquired through the cellular network as shown in Figure 3, to the AP. Once the AP receives the location, it stores it locally in its memory.

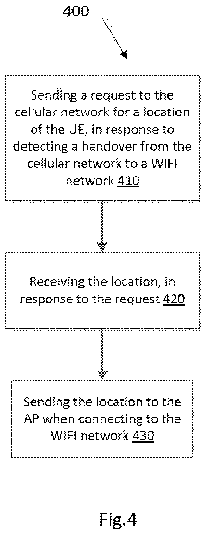

In view of the exemplary signal flow 300 for providing a UE location, a flowchart for a generalized method 400 is illustrated in Figure 4.

Method 400 of Figure 4 allows for obtaining the UE location, when a handover of a UE from the cellular network to the WIFI network happens. It is assumed that the UE has a SIM card and is a subscriber of the cellular network.

In block 410, method 400 sends a request to the cellular network for a location of the UE, in response to detecting a handover from the cellular network to a WIFI network. For example, the UE 124 sends the request to a network node in the cellular network, such as the MME 305.

In block 420, method 400 receives the UE location, in response to the request. For example, the UE 124 receives the last/latest location of the UE registered by the cellular network. The location could be: a Cell Global Identification (CGI), an Evolved Universal Terrestrial Radio Access CGI (eCGI), or a geographical location, for example.

In block 430, the UE 124 sends the received location to the AP, when connecting to the AP, so that the AP can share the location with other UEs that do not know their location. Once the AP receives the location, it stores it locally, in one or more of its memories, or in an associated AAA server, for example.

Now, turning back to Figure 2, after the AP receives the location request from the first UE, it can retrieve the stored location given by the second UE and send that location to the first UE for use in VoWIFI calls.

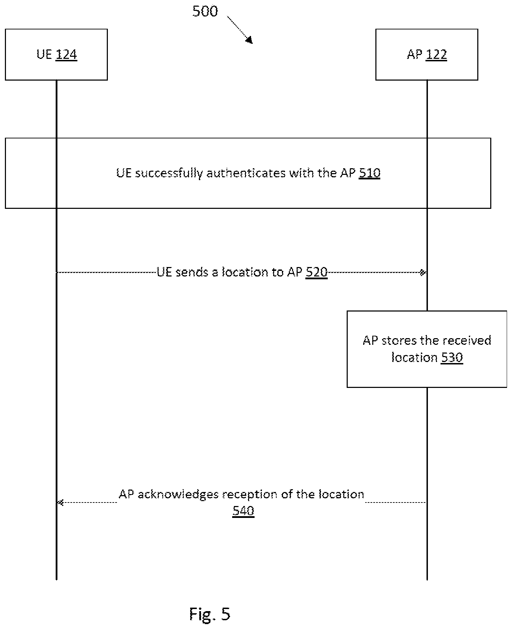

In more detail, Figure 5 illustrates a signal flow 500 of the location learning process by the AP in the WIFI network, according to an embodiment.

In step 510, the authentication between the second UE and the associated/detected AP is successful. Authentication messages exchanged between the second UE and the AP are well-known in the art and thus will not be described.

In step 520, the second UE, that has acquired its location, either through GPS or the cellular network, sends a message to the AP. The message can be a wireless Local Area Network (LAN) management frame of the IEEE 802.11 protocol, for example. This management frame has a field called "Tag parameter: Vendor Specific (221)". The tag parameter can incorporate a new Information Element (IE) in which the UE location can be inserted. IEs are a device's way to transfer descriptive information about itself inside management frames. There are usually several IEs inside each such frame, for example.

It should be appreciated that messages other than the management frames can be used to convey the second UE's location to the AP. Also, when using the management frames, fields other than the tag parameter can be used to carry the second UE's location.

In step 530, once the AP receives the message, it retrieves the second UE's location and stores it locally in a memory, in the form of a table, for example. The AP can be also associated with an Authentication Authorization and Accounting (AAA) server. In such a case, the location from the second UE can be stored in the AAA server associated with the AP. For example, the AP can use the RADIUS protocol to send the location to the AAA server. Then, the AAA server binds/correlates the received location with the AP, using its identity, for example.

In step 540, the AP or the AAA server sends a message to the second UE to confirm and acknowledge the reception of the location.

A plurality of second UEs can share their location with the AP using steps 510 to 540. For each second UE, the corresponding location is stored in the AP or its associated AAA server.

Once the AP has learned the location of UEs connected to itself, it can start sharing such information with UEs that do not know their location.

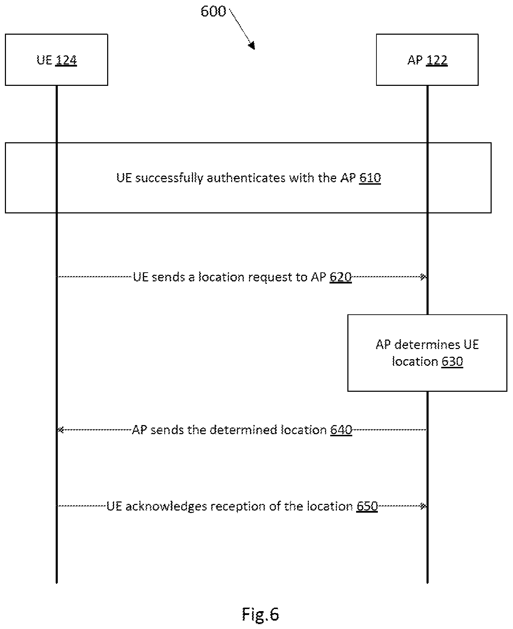

More specifically, Figure 6 illustrates a signal flow for providing a location to a first UE by sharing a location of a second UE, as learned in Figure 5, for example. It is assumed that the first UE does not have a GPS or a SIM card but when it connects to the WIFI network via an AP, it wishes to make a VoWIFI call. For example, the first UE can be a tablet that has WIFI connection and as such can connect to the nearby AP. The nearby AP is the same as the AP described above. For example, the first UE is at the same coffee shop as the second UEs that provided their location to the AP.

Once the authentication is successful (step 610) between the first UE and the AP, the first UE 124 sends a message to the AP (step 620). The message comprises a request for location. For example, the request comprises an indication that the first UE 124 does not know or have its location. The message can be a LAN management frame in which the "Tag parameter: Vendor Specific" field includes the value of 0x0. This value indicates a lack of location information from the first UE, i.e. the first UE is not aware of its own location. It should be appreciated by skilled persons in the art that other messages, fields and values can be used by the first UE to indicate the lack of location information.

In step 630, in response to the received message, the AP determines a UE location from all the locations received from the second UEs. For example, the AP selects the location that is received from the highest number of second UEs at the coffee shop. However, there may be some factors to consider in the determination of the location, for example, the age of the provided location. In other words, the most recently received locations may have higher weights in determining the location to be sent to the first UE, than locations received some time ago. Also, in the case that the received locations are different from each other, it is possible to consider only the common part of the different locations.

In step 640, the AP sends the determined location to the first UE.

Once the first UE receives the location, it sends an acknowledgement to the AP, in step 650.

As it is connected to the WIFI network, the first UE is enabled to make a VoWIFI call with the cellular network through a network node, such as ePDG 116. When placing the call, the first UE can include the location that it received from the AP.

It should be noted that it is assumed that the AP has received at least one location from a second UE before it could share that location with the first UE. However, in case no location was received from any second UE, the AP could use its own location for sharing it with the first UE, if its location is available. The available location of the AP is usually entered manually during the AP setup. Therefore, when the AP is moved physically to another place, its new location may not be updated.

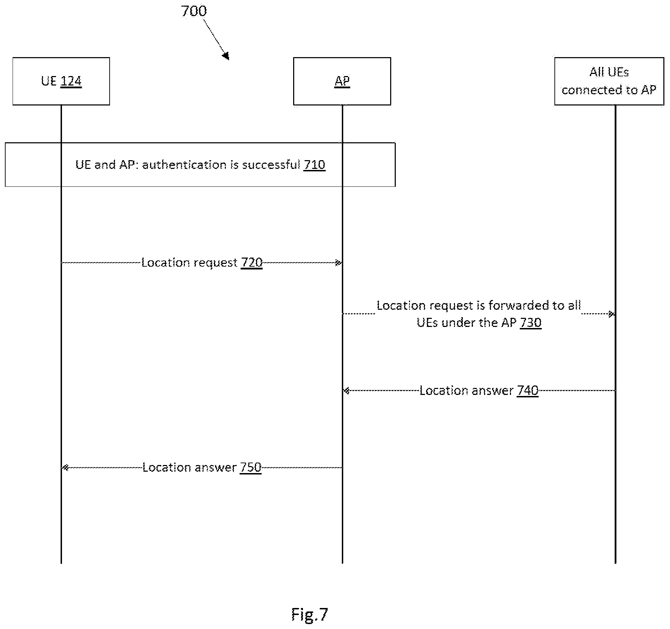

Now turning to Figure 7, another way for determining the location of the first UE will be described, according to an embodiment.

In step 710, the authentication between the first UE and the AP is successful.

In step 720, the first UE sends a location request to the AP once it is connected to the AP. The location request can be included in the header options for an IPv4 data packet or in the extended header option for an IPv6 data packet.

Upon receipt of the location request, in step 730 the AP broadcasts, or forwards the location request in its domain, i.e. to all UEs connected thereto.

In response to the broadcast message, the UEs that know their location (i.e. the second UEs) send a location answer with their locations to the AP, in step 640. Indeed, any of the second UEs that is aware of its location, through GPS or cellular network, for example, can reply back to the broadcast message with its location. The second UE can send its location to the AP in a data packet. If it is an IPv4 data packet, the location is included in the header options of the data packet. If it is an IPv6 data packet, the location is included in the extended header option of the data packet.

In step 750, the AP sends the location received from the second UE to the first UE. When a plurality of locations are received from a plurality of second UEs, the AP can select the location that has been received/shared by the highest number of second UEs. Of course, it will be appreciated by persons skilled in the art that other metrics/factors can be used to select the most popular or probable location.

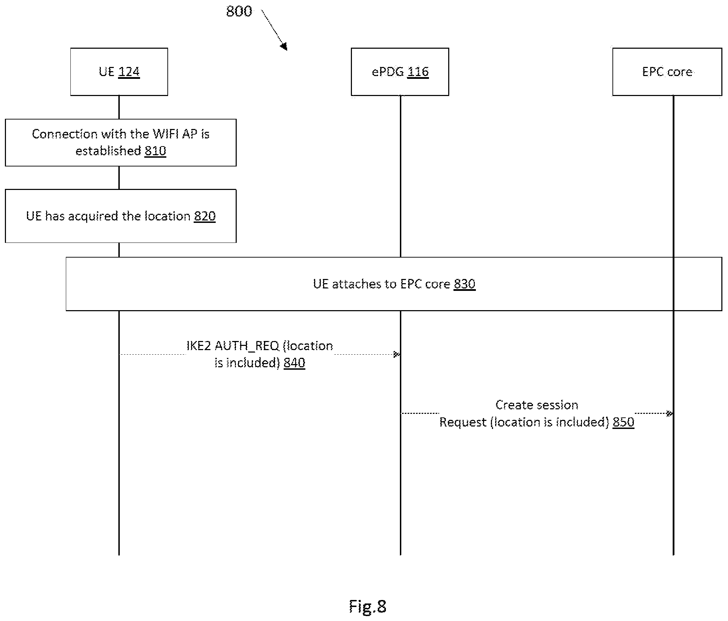

Figure 8 shows a signal flow 800 for providing a UE location to the network when establishing a VoWIFI call, according to an embodiment.

In step 810, the connection between a UE and the AP is established, through an authentication process, for accessing the WIFI network for example. This is well-known in the art and thus will not be described.

In step 820, the UE 124 has obtained/acquired its location, either through the cellular network, as shown in Figure 3, through the GPS or through the AP as shown in Figure 6. The location is stored in a memory of the UE 124.

In step 830, the UE 124 starts the process of creating a session into the EPC network, such as with the EPC 109. This includes UE attachment in the EPC network. Once the UE is attached, UE registration in the IMS network will be performed, for example.

More specifically, in step 840, the UE 124 communicates with the ePDG 116 by sending an IKE2 AUTH_REQ message. The UE location is included in this message. The IKE2 AUTH_REQ message is part of the IKE protocol that is used for communications between the UE and the ePDG 116. The UE location can be included in other types of messages, as will be appreciated by an ordinary person skilled in the art.

In step 850, upon receipt of the IKE2 AUTH_REQ message, the ePDG 116 sends a create session request to the EPC 109, the create session request comprising the location.

After the EPC 109 receives the create session request, it is in possession of the UE's location. The location can be shared with the IP Multimedia Subsystem (IMS) network as well.

As can be seen in Figure 8, the UE location is available at the UE, the ePDG 116 and the EPC 109 where it can be used, for emergency calls or other applications such as advertisements, policy control based location, location based services, etc.

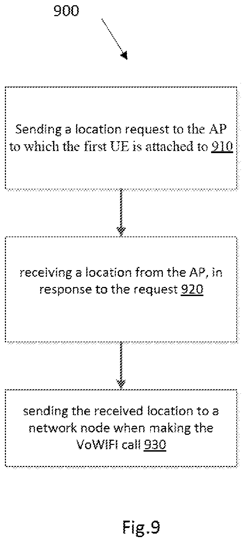

Now turning to Figure 9, a method for providing a location to a first UE for a VoWIFI call will be described, according to one embodiment. It is assumed that the first UE ignores its location and has successfully attached to or authenticated with the nearby AP.

In block 910, method 900 sends a location request to the access point (AP) to which the first UE is attached to.

In block 920, method 900 receives a location from the AP, in response to the request.

In block 930, method 900 sends the received location to a network node when establishing the VoWIFI call. The network node is the ePDG 116 of Figure 1, for example.

The received location has been shared by a second UE with the AP, the second UE being previously or currently attached to the AP and having knowledge of its location.

The second UE may have a GPS integrated therein and thus the received location is provided by the GPS.

Alternatively, the second UE has a SIM card and is a subscriber of a cellular network. In this case, the received location is provided by the cellular network, during a handover from the cellular network to the WIFI network.

Furthermore, the received location can be determined from a plurality of locations shared by a plurality of second UEs with the AP. In this case, the received location is the location shared by the highest number of second UEs (at the coffee shop, for example).

The received location can be included in a session activation message when it is sent to the network node, e.g. ePDG 116. The session activation message is used for creating a session in the ePC network, which includes attachment in the EPC network. Once the session is created, the UE will have an IP address assigned by the EPC. The IP address can be used by the UE to browse the internet or to make VoWIFI calls.

Furthermore, when the AP receives the location request, it can broadcast the request in its domain, to all the UEs (referred to as second UEs) that are connected thereto. The second UEs that have knowledge of their location (through GPS or cellular network), will send their location to the AP, in response to the broadcast message. Once the AP receives the location from the second UEs, it sends it to the first UE, in response to the received location request.

The received location can be a CGI, an eCGI or a geographical location. Also, it should be noted that the location received by the first UE may comprise any information associated with the location.

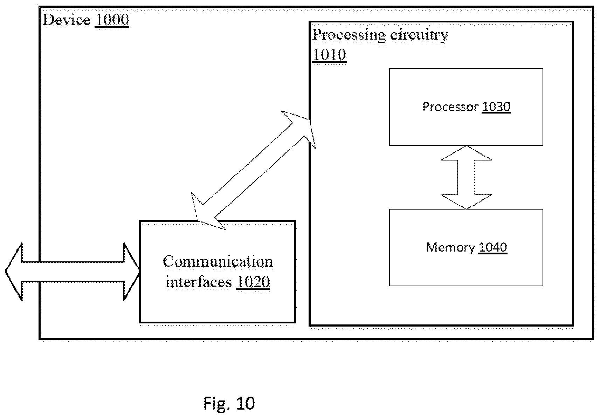

Figure 10 illustrates a device 1000, for providing UE location for a VoWIFI call, according to one embodiment. The device can be the UE 124, for example.

The device 1000 has a processing circuitry 1010 connected to one or more communication interfaces 1020.

The communication interface(s) 1020 are configured to communicate with other network nodes or network elements in the cellular network and/or in the WIFI network.

The processing circuitry 1010 comprises a processor 1030 and a memory 1040 connected thereto. The memory 1040 may contain instructions that, when executed, cause the computing device 1000 to perform method 900, for example. As such, the processor 1010 is configured to carry out method 900, as described above.

Also, the memory 1040 can store the location received from the AP. The memory 940 may include one or more of volatile and non-volatile memories, such as Random Access Memory ("RAM"), Read Only Memory ("ROM"), a solid state disk ("SSD"), Flash, Phase Change Memory ("PCM"), or other types of data storage.

Furthermore, a computer program comprising non-transitory computer-readable storage medium storing instructions which, when executed by a processor, e.g. 1030, of a computing device, 1000, cause the computing device 1000 to carry out method 900 is provided. The instructions may be stored in the memory 1040, for example.

It should be appreciated that the processing circuitry 1010, when configured with appropriate program code, may be understood to comprise several functional "modules," where each module comprises program code for carrying out the corresponding function, when executed by an appropriate processor.

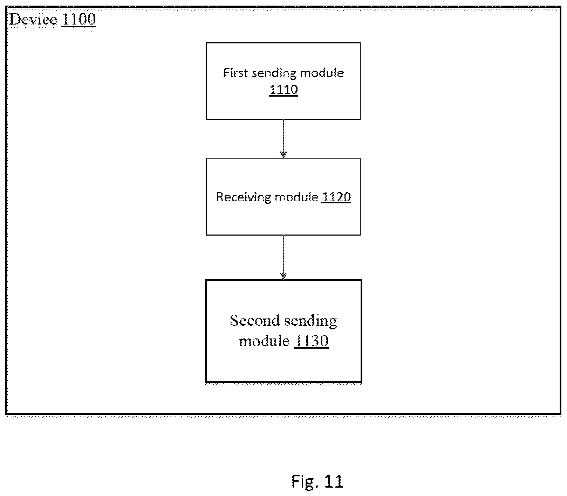

Thus, for example, Figure 11 illustrates a computing device 1100 adapted to carry out method 900, may be understood to comprise a first sending module 1110, a receiving module 1120, and a second sending module 1130, according to another embodiment.

The first sending module 1110 is configured to send a location request to an access point to which the UE is attached to.

The receiving module 1120 is configured to receive a location from the AP, in response to the request.

The second sending module 1130 is configured to send the received location to a network node when establishing the VoWIFI call.

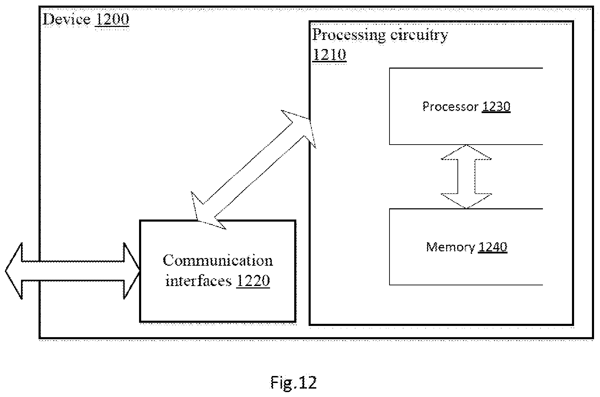

Now, turning to Figure 12, a network node 1200, for providing UE location information for a VoWIFI call, according to one embodiment, will be described. The network node 1200 can be an access point, for example.

The network node 1200 has a processing circuitry 1210 connected to one or more communication interfaces 1220.

The communication interface(s) 1220 are configured to communicate with other network nodes or network elements in the WIFI network and with UEs.

The processing circuitry 1210 comprises a processor 1230 and a memory 1240 connected thereto. The memory 1240 may contain instructions that, when executed, cause the network node 1200 to perform method 200, for example. As such, the processor 1210 is configured to carry out method 200, as described above.

Also, the memory 1240 can store the location information received from the one or more first UEs. The memory 1240 may include one or more of volatile and non-volatile memories, such as Random Access Memory ("RAM"), Read Only Memory ("ROM"), a solid state disk ("SSD"), Flash, Phase Change Memory ("PCM"), or other types of data storage. The memory 1240 may be internal or distributed memory.

Furthermore, a computer program comprising non-transitory computer-readable storage medium storing instructions which, when executed by a processor, e.g. 1230, of a network node, such as 1200, cause the network node 1200 to carry out method 200 is provided. The instructions may be stored in the memory 1240, for example.

It should be appreciated that the processing circuitry 1210, when configured with appropriate program code, may be understood to comprise several functional "modules," where each module comprises program code for carrying out the corresponding function, when executed by an appropriate processor.

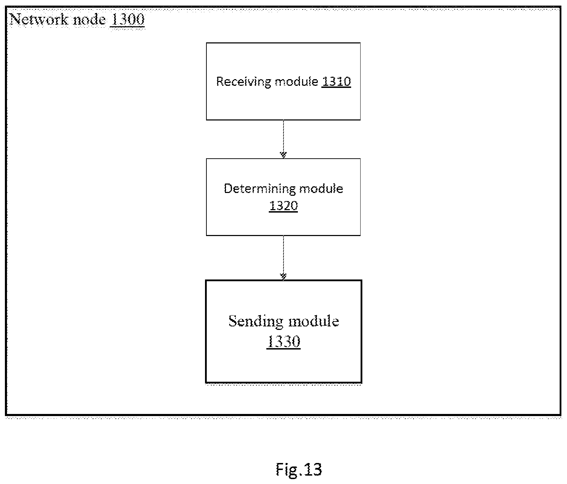

Thus, for example, Figure 13 illustrates a network node 1300 adapted to carry out method 200, may be understood to comprise a receiving module 1310, a determining module 1320, and a sending module 1330, according to another embodiment.

The receiving module 1310 is configured to receive a location request from the first UE.

The determining module 1320 is configured to determine the location of the first UE, in response to the received location request.

The sending module 1330 is configured to send the determined location to the first UE, for use when establishing the VoWIFI call.

Embodiments may be represented as a software product stored in a machine-readable medium (such as the non-transitory machine readable storage media also referred to as a computer-readable medium, a processor-readable medium, or a computer usable medium having a computer readable program code embodied therein). The non-transitory machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile) such as hard drive or solid state drive, or similar storage mechanism. The machine-readable medium may contain various sets of instructions, code sequences, configuration information, or other data, which, when executed, cause a processor to perform steps in a method according to an embodiment. Those of ordinary skill in the art will appreciate that other instructions and operations necessary to implement the described embodiments may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for providing a location of a first User Equipment (124), UE, in a Voice over Wireless Fidelity, VoWIFI, call, the method being carried out by the first UE (124) and comprising:
sending (910) a location request to an access point (122), AP, to which the first UE (124) is attached to;
receiving (920) the location of the first UE (124) from the AP (122), in response to the request; and
sending (930) the received location to a network node when establishing the VoWIFI call,
wherein the received location has been shared by a second UE with the AP, the second UE being previously or currently attached to the AP and having knowledge of its location,
wherein the location shared by the second UE is provided by one of a Global Positioning System, GPS, integrated in the second UE or by a cellular network of which the second UE is a subscriber,
wherein the location received from the AP is determined from a plurality of locations shared by a plurality of second UEs with the AP, the plurality of second UEs having knowledge of their locations, wherein the determined location is the location received by a highest number of second UEs, and
wherein the received location is shared with the AP by the plurality of second UEs attached to the AP, in response to a broadcast message from the AP, the broadcast message requesting for location information.

2. A first User Equipment (124), UE, for providing location in a Voice over Wireless Fidelity, VoWIFI, call, the first UE (124) comprising a processing circuitry adapted to cause the first UE (124) to:
send a location request to an access point (122), AP, to which the first UE (124) is attached to;
receive the location for the first UE (124) from the AP (122), in response to the request; and
send the received location to a network node when establishing the VoWIFI call, wherein the processor is adapted to send the received location to the network node in a session activation message, wherein the session activation message is used for creating a session in an Evolved Packet Core, EPC, network,
wherein the received location has been shared by a second UE with the AP, the second UE being previously or currently attached to the AP and having knowledge of its location,
wherein the location shared by the second UE is provided by one of a Global Positioning System, GPS, integrated in the second UE or by a cellular network of which the second UE is a subscriber,
wherein the location received from the AP is determined from a plurality of locations shared by a plurality of second UEs with the AP, the plurality of second UEs having knowledge of their locations, wherein the determined location is the location received by a highest number of second UEs, and
wherein the received location is shared with the AP by the plurality of second UEs attached to the AP, in response to a broadcast message from the AP, the broadcast message requesting for location information.

3. The first UE of claim 2, wherein the processing circuitry comprises a processor, a memory and an interface both coupled with the processor, the memory containing instructions that, when executed, cause the processor to perform operations of sending the request, receiving the location and sending the received location.

4. The first UE of any claims 2-3, wherein the processor is adapted to send the location request in an Information Element, IE, of a management frame in IEEE 802.11 wireless Local Area Network, LAN, protocol and/or
wherein the location comprises one of a cell global identification, CGI, an Evolved Universal Mobile Telecommunications System Terrestrial Radio Access Network cell global identification, eCGI, and a geographical location, wherein the network node is an Evolved Packet Data Gateway, e-PDG.

5. A method for providing a location to a first User Equipment (124), UE, for use in a Voice over Wireless Fidelity, VoWIFI, call, the method being carried out by a network node and comprising:
receiving (210) a location request from the first UE (124);
determining (220) the location of the first UE (124), in response to the received request; and
sending the determined location to the first UE (124), for use when establishing the VoWIFI call,
wherein the processor retrieves a location stored in the network node when determining the location of the first UE, the location being received from a second UE that had knowledge of its location and that is previously or currently attached to the network node, and
wherein the second UE has a Global Positioning System, GPS, integrated therein, and wherein the second UE has a Subscriber Identity Module, SIM, card and is a subscriber of a cellular network, and wherein the location from the second UE is given by one of the cellular network and the GPS,
the method further comprising:
receiving a plurality of locations from a plurality of second UEs, determining the location comprises selecting a location from the plurality of location that was shared by a highest number of second UEs.

6. A network node for providing location to a first User Equipment (124), UE, for use in a VoWIFI call, the network node comprising a processing circuitry adapted to:
receive a location request from the first UE (124);
determine the location of the first UE (124), in response to the received request; and
send the determined location to the first UE (124), for use when establishing a VoWIFI call,
wherein the processor retrieves a location stored in the network node when determining the location of the first UE, the location being received from a second UE that had knowledge of its location and that is previously or currently attached to the network node,
wherein the second UE has a Global Positioning System, GPS, integrated therein, and wherein the second UE has a Subscriber Identity Module, SIM, card and is a subscriber of a cellular network, and wherein the location from the second UE is given by one of the cellular network and the GPS,
the processing circuitry is further adapted to:
receive a plurality of locations from a plurality of second UEs and select a location from the plurality of locations that was shared by a highest number of second UEs.

7. The network node of claim 6, wherein the processing circuitry comprises a processor, a network interface and a memory both couplet with the processor, the memory containing instructions that, when executed, cause the processor to perform operation of receiving the location request, determining the location and sending the determined location.

8. The network node of claim 6,
wherein the second UE sends a request to the cellular network for its location after a handover from the cellular network to a WIFI network occurs.

9. The network node of any of claims 6-8, wherein the first UE does not have a GPS or a SIM card and/or
wherein the location request is provided by a management frame in IEEE 802.11 wireless Local Area Network, LAN, protocol and/or
wherein the determined location information is one of a cell global identification, CGI, an Evolved Universal Mobile Telecommunications System Terrestrial Radio Access Network cell global identification, eCGI, and a geographical location.

10. The network node of claim 6, wherein the processor further:
broadcasts the received location request within a domain of the network node;
in response to the broadcast, receives locations from third UEs connected to the network node, the third UEs having knowledge of their location; and
selects the location received from a highest number of third UEs and, optionally,
wherein the third UEs have knowledge of their location through one of GPS or cellular network and/or
wherein the locations received from the third UEs are included in one of a header option for an IPv4 data packet and an extended header option for an IPv6 data packet, and/or
wherein the network node is an access point.

## Patentansprüche

1. Verfahren zum Bereitstellen eines Standorts eines ersten Benutzergeräts (User Equipment - UE) (124) bei einem VoWiFi(Voice over Wireless Fidelity)-Anruf, wobei das Verfahren durch das erste UE (124) ausgeführt wird und Folgendes umfasst:
Senden (910) einer Standortanforderung an einen Zugangspunkt (access point - AP) (122), dem das erste UE (124) zugeordnet ist;
Empfangen (920) des Standorts des ersten UE (124) von dem AP (122) als Antwort auf die Anforderung; und
Senden (930) des empfangenen Standorts an einen Netzwerkknoten beim Aufbau des VoWiFi-Anrufs,
wobei der empfangene Standort durch ein zweites UE dem AP mitgeteilt wurde, wobei das zweite UE dem AP zuvor zugeordnet war oder ihm aktuell zugeordnet ist und Kenntnis von seinem Standort hat,
wobei der durch das zweite UE mitgeteilte Standort durch ein in das zweite UE integriertes Global Positioning System (GPS) oder durch ein Mobilfunknetzwerk, dessen Teilnehmer das zweite UE ist, bereitgestellt wird,
wobei der von dem AP empfangene Standort aus einer Vielzahl von Standorten bestimmt wird, die durch eine Vielzahl von zweiten UEs dem AP mitgeteilt wird, wobei die Vielzahl von zweiten UEs Kenntnis von ihren Standorten hat, wobei der bestimmte Standort der Standort ist, der durch eine höchste Anzahl von zweiten UEs empfangen wird, und
wobei der empfangene Standort dem AP durch die Vielzahl von zweiten UEs, die dem AP zugeordnet ist, als Reaktion auf eine Rundsendenachricht von dem AP mitgeteilt wird, wobei die Rundsendenachricht Standortinformationen anfordert.

2. Erstes Benutzergerät (UE) (124) zum Bereitstellen eines Standorts in einem VoWiFi(Voice over Wireless Fidelity)-Anruf, wobei das erste UE (124) eine Verarbeitungsschaltung umfasst, die dazu ausgelegt ist, das erste UE (124) zu Folgendem zu veranlassen:
Senden einer Standortanforderung an einen Zugangspunkt (access point - AP) (122), dem das erste UE (124) zugeordnet ist;
Empfangen des Standorts für das erste UE (124) von dem AP (122) als Antwort auf die Anforderung; und
Senden des empfangenen Standorts an einen Netzwerkknoten beim Aufbau des VoWiFi-Anrufs, wobei der Prozessor dazu ausgelegt ist, den empfangenen Standort in einer Sitzungsaktivierungsnachricht an den Netzwerkknoten zu senden, wobei die Sitzungsaktivierungsnachricht zum Erstellen einer Sitzung in einem EPC(Evolved Packet Core)-Netzwerk verwendet wird,
wobei der empfangene Standort durch ein zweites UE dem AP mitgeteilt wurde, wobei das zweite UE dem AP zuvor zugeordnet war oder ihm aktuell zugeordnet ist und Kenntnis von seinem Standort hat,
wobei der durch das zweite UE mitgeteilte Standort durch ein in das zweite UE integriertes Global Positioning System (GPS) oder durch ein Mobilfunknetzwerk, dessen Teilnehmer das zweite UE ist, bereitgestellt wird,
wobei der von dem AP empfangene Standort aus einer Vielzahl von Standorten bestimmt wird, die durch eine Vielzahl von zweiten UEs dem AP mitgeteilt wird, wobei die Vielzahl von zweiten UEs Kenntnis von ihren Standorten hat, wobei der bestimmte Standort der Standort ist, der durch eine höchste Anzahl von zweiten UEs empfangen wird, und
wobei der empfangene Standort dem AP durch die Vielzahl von zweiten UEs, die dem AP zugeordnet ist, als Reaktion auf eine Rundsendenachricht von dem AP mitgeteilt wird, wobei die Rundsendenachricht Standortinformationen anfordert.

3. Erstes UE nach Anspruch 2, wobei die Verarbeitungsschaltung einen Prozessor sowie einen Speicher und eine Schnittstelle, die beide mit dem Prozessor gekoppelt sind, umfasst, wobei der Speicher Anweisungen enthält, die, wenn sie ausgeführt werden, den Prozessor veranlassen, Operationen zum Senden der Anforderung, Empfangen des Standorts und Senden des empfangenen Standorts durchzuführen.

4. Erstes UE nach einem der Ansprüche 2-3, wobei der Prozessor dazu ausgelegt ist, die Standortanforderung in einem Informationselement (IE) eines Verwaltungsrahmens im IEEE-802.11-Wireless-Local-Area Network(LAN)-Protokoll zu senden, und/oder
wobei der Standort eine globale Zellkennung (cell global identification - CGI), eine globale Zellkennung des terrestrischen Funkzugangsnetzwerkes des Evolved Universal Mobile Telecommunications System (eCGI) oder einen geografischen Standort umfasst, wobei der Netzwerkknoten ein Evolved Packet Data Gateway (e-PDG) ist.

5. Verfahren zum Bereitstellen eines Standorts für ein erstes Benutzergerät (UE) (124) zur Verwendung in einem Voice-over-Wireless-Fidelity(VoWiFi)-Anruf, wobei das Verfahren durch einen Netzknoten ausgeführt wird und Folgendes umfasst:
Empfangen (210) einer Standortanforderung von dem ersten UE (124);
Bestimmen (220) des Standorts des ersten UE (124) als Reaktion auf die empfangene Anforderung; und
Senden des bestimmten Standorts an das erste UE (124) zur Verwendung beim Aufbau des VoWiFi-Anrufs,
wobei der Prozessor beim Bestimmen des Standorts des ersten UE einen in dem Netzwerkknoten gespeicherten Standort abruft, wobei der Standort von einem zweiten UE empfangen wird, das Kenntnis von seinem Standort hatte und das zuvor dem Netzwerkknoten zugeordnet war oder aktuell diesem zugeordnet ist, und
wobei das zweite UE ein darin integriertes globales Positionierungssystem (GPS) aufweist und wobei das zweite UE eine Teilnehmeridentitätsmodul(Subscriber Identity Module - SIM)-Karte aufweist und ein Teilnehmer eines Mobilfunknetzwerkes ist und wobei der Standort von dem zweiten UE durch das Mobilfunknetz oder das GPS angegeben wird,
wobei das Verfahren ferner Folgendes umfasst:
Empfangen einer Vielzahl von Standorten von einer Vielzahl von zweiten UEs, wobei das Bestimmen des Standorts das Auswählen eines Standorts aus der Vielzahl von Standorten, die durch eine höchste Anzahl von zweiten UEs mitgeteilt wurde, umfasst.

6. Netzwerkknoten zum Bereitstellen eines Standorts für ein erstes Benutzergerät (UE) (124) zur Verwendung in einem VoWiFi-Anruf, wobei der Netzwerkknoten eine Verarbeitungsschaltung umfasst, die für Folgendes ausgelegt ist:
Empfangen einer Standortanforderung von dem ersten UE (124);
Bestimmen des Standorts des ersten UE (124) als Reaktion auf die empfangene Anforderung; und
Senden des bestimmten Standorts an das erste UE (124) zur Verwendung beim Aufbau eines VoWiFi-Anrufs,
wobei der Prozessor einen in dem Netzwerkknoten gespeicherten Standort abruft, wenn er den Standort des ersten UE bestimmt, wobei der Standort von einem zweiten UE empfangen wird, das Kenntnis von seinem Standort hatte und das zuvor dem Netzwerkknoten zugeordnet war oder aktuell diesem zugeordnet ist,
wobei das zweite UE ein darin integriertes globales Positionierungssystem (GPS) aufweist und wobei das zweite UE eine Teilnehmeridentitätsmodul(Subscriber Identity Module - SIM)-Karte aufweist und ein Teilnehmer eines Mobilfunknetzwerkes ist und wobei der Standort von dem zweiten UE durch das Mobilfunknetz oder das GPS angegeben wird,
wobei die Verarbeitungsschaltung ferner zu Folgendem ausgelegt ist:
Empfangen einer Vielzahl von Standorten von einer Vielzahl von zweiten UEs und Auswählen eines Standorts aus der Vielzahl von Standorten, die durch eine höchste Anzahl von zweiten UEs mitgeteilt wurde.

7. Netzwerkknoten nach Anspruch 6, wobei die Verarbeitungsschaltung einen Prozessor sowie eine Netzwerkschnittstelle und einen Speicher, die beide mit dem Prozessor gekoppelt sind, umfasst, wobei der Speicher Anweisungen enthält, die, wenn sie ausgeführt werden, den Prozessor veranlassen, eine Operation des Empfangens der Standortanforderung, des Bestimmens des Standorts und des Sendens des bestimmten Standorts durchzuführen.

8. Netzwerkknoten nach Anspruch 6,
wobei das zweite UE eine Anforderung an das Mobilfunknetzwerk nach seinem Standort sendet, nachdem eine Weiterreichung von dem Mobilfunknetzwerk in ein WiFi-Netzwerk erfolgt ist.

9. Netzwerkknoten nach einem der Ansprüche 6-8, wobei das erste UE kein GPS oder keine SIM-Karte aufweist und/oder
wobei die Standortanforderung durch einen Verwaltungsrahmen im IEEE-802.11-Wireless-Local-Area Network(LAN)-Protokoll bereitgestellt wird und/oder
wobei die bestimmte Standortinformation eine globale Zellkennung (cell global identification - CGI), eine globale Zellkennung des terrestrischen Funkzugangsnetzwerkes des Evolved Universal Mobile Telecommunications System (eCGI) oder ein geografischer Standort ist.

10. Netzwerkknoten nach Anspruch 6, wobei der Prozessor ferner:
die empfangene Standortanforderung innerhalb einer Domäne des Netzwerkknotens rundsendet;
als Reaktion auf das Rundsenden Standorte von dritten UEs empfängt, die mit dem Netzwerkknoten verbunden sind, wobei die dritten UEs Kenntnis von ihrem Standort haben; und
den Standort auswählt, der von einer höchsten Anzahl von dritten UEs empfangen wurde, und optional
wobei die dritten UEs über GPS oder das Mobilfunknetzwerk Kenntnis von ihrem Standort haben und/oder
wobei die von den dritten UEs empfangenen Standorte in einer von einer Header-Option für ein IPv4-Datenpaket und einer erweiterten Header-Option für ein 1Pv6-Datenpaket enthalten sind und/oder
wobei der Netzwerkknoten ein Zugangspunkt ist.

## Revendications

1. Procédé pour fournir un emplacement d'un premier équipement utilisateur (124), UE, dans un appel par voix sur WiFi, VoWIFI, le procédé étant mis en œuvre par le premier UE (124) et comprenant :
l'envoi (910) d'une demande d'emplacement à un point d'accès (122), AP, auquel le premier UE (124) est attaché ;
la réception (920) de l'emplacement du premier UE (124) de l'AP (122), en réponse à la demande ; et
l'envoi (930) de l'emplacement reçu à un noeud de réseau lors de l'établissement de l'appel par voix sur WiFi,
dans lequel l'emplacement reçu a été partagé par un second UE avec l'AP, le second UE étant précédemment ou actuellement attaché à l'AP et ayant connaissance de son emplacement,
dans lequel l'emplacement partagé par le second UE est fourni par l'un d'un système de positionnement global, GPS, intégré dans le second UE ou par un réseau cellulaire dont le second UE est un abonné,
dans lequel l'emplacement reçu à partir de l'AP est déterminé à partir d'une pluralité d'emplacements partagés par une pluralité de deuxièmes UE avec l'AP, la pluralité de deuxièmes UE ayant connaissance de leurs emplacements, dans lequel l'emplacement déterminé est l'emplacement reçu par un plus grand nombre de deuxièmes UE, et
dans lequel l'emplacement reçu est partagé avec l'AP par la pluralité de deuxièmes UE attachés à l'AP, en réponse à un message de diffusion provenant de l'AP, le message de diffusion demandant des informations d'emplacement.

2. Premier équipement utilisateur (124), UE, pour fournir un emplacement dans un appel par voix sur WiFi, VoWIFI, le premier UE (124) comprenant un circuit de traitement conçu pour amener le premier UE (124) à :
envoyer une demande d'emplacement à un point d'accès (122), AP, auquel le premier UE (124) est attaché ;
recevoir l'emplacement pour le premier UE (124) de l'AP (122), en réponse à la demande ; et
envoyer l'emplacement reçu à un noeud de réseau lors de l'établissement de l'appel par voix sur WiFi, dans lequel le processeur est conçu pour envoyer l'emplacement reçu au noeud de réseau dans un message d'activation de session, dans lequel le message d'activation de session est utilisé pour créer une session dans un réseau de noyau de paquets évolué, EPC,
dans lequel l'emplacement reçu a été partagé par un second UE avec l'AP, le second UE étant précédemment ou actuellement attaché à l'AP et ayant connaissance de son emplacement,
dans lequel l'emplacement partagé par le second UE est fourni par l'un d'un système de positionnement global, GPS, intégré dans le second UE ou par un réseau cellulaire dont le second UE est un abonné,
dans lequel l'emplacement reçu à partir de l'AP est déterminé à partir d'une pluralité d'emplacements partagés par une pluralité de deuxièmes UE avec l'AP, la pluralité de deuxièmes UE ayant connaissance de leurs emplacements, dans lequel l'emplacement déterminé est l'emplacement reçu par un plus grand nombre de deuxièmes UE, et
dans lequel l'emplacement reçu est partagé avec l'AP par la pluralité de deuxièmes UE attachés à l'AP, en réponse à un message de diffusion provenant de l'AP, le message de diffusion demandant des informations d'emplacement.

3. Premier UE selon la revendication 2, dans lequel le circuit de traitement comprend un processeur, une mémoire et une interface, toutes deux couplées au processeur, la mémoire contenant des instructions qui, lorsqu'elles sont exécutées, amènent le processeur à exécuter des opérations d'envoi de la demande, de réception de l'emplacement et d'envoi de l'emplacement reçu.

4. Premier UE selon l'une quelconque des revendications 2 et 3, dans lequel le processeur est conçu pour envoyer la demande d'emplacement dans un élément d'informations, IE, d'une trame de gestion dans un protocole de réseau local sans fil IEEE 802.11, LAN, et/ou
dans lequel l'emplacement comprend l'un d'une identification globale de cellule, CGI, d'une identification globale de cellule de réseau d'accès radio terrestre de système de télécommunications mobiles universel évolué, eCGI, et d'un emplacement géographique, dans lequel le noeud de réseau est une passerelle de données par paquets évoluée, e-PDG.

5. Procédé pour fournir un emplacement à un premier équipement utilisateur (124), UE, pour une utilisation dans un appel par voix sur WiFi, VoWIFI, le procédé étant mis en œuvre par un noeud de réseau et comprenant :
la réception (210) d'une demande d'emplacement à partir du premier UE (124) ;
la détermination (220) de l'emplacement du premier UE (124), en réponse à la demande reçue ; et
l'envoi de l'emplacement déterminé au premier UE (124), pour une utilisation lors de l'établissement de l'appel par voix sur WiFi,
dans lequel le processeur récupère un emplacement stocké dans le noeud de réseau lors de la détermination de l'emplacement du premier UE, l'emplacement étant reçu à partir d'un second UE qui avait connaissance de son emplacement et qui est précédemment ou actuellement attaché au noeud de réseau, et
dans lequel le second UE est doté d'un système de positionnement global, GPS, intégré à l'intérieur, et dans lequel le second UE est doté d'une carte de module d'identité d'abonné, SIM, et est un abonné d'un réseau cellulaire, et dans lequel l'emplacement du second UE est donné par l'un du réseau cellulaire et du GPS,
le procédé comprenant également :
la réception d'une pluralité d'emplacements à partir d'une pluralité de deuxièmes UE, la détermination de l'emplacement comprend la sélection d'un emplacement à partir de la pluralité d'emplacements qui ont été partagés par un plus grand nombre de deuxièmes UE.

6. Noeud de réseau pour fournir un emplacement à un premier équipement utilisateur (124), UE, pour une utilisation dans un appel par voix sur WiFi, le noeud de réseau comprenant un circuit de traitement conçu pour :
recevoir une demande d'emplacement à partir du premier UE (124) ;
déterminer l'emplacement du premier UE (124), en réponse à la demande reçue ; et
envoyer l'emplacement déterminé au premier UE (124), pour une utilisation lors de l'établissement d'un appel par voix sur WiFi,
dans lequel le processeur récupère un emplacement stocké dans le noeud de réseau lors de la détermination de l'emplacement du premier UE, l'emplacement étant reçu à partir d'un second UE qui avait connaissance de son emplacement et qui est précédemment ou actuellement attaché au noeud de réseau,
dans lequel le second UE est doté d'un système de positionnement global, GPS, intégré à l'intérieur, et dans lequel le second UE est doté d'une carte de module d'identité d'abonné, SIM, et est un abonné d'un réseau cellulaire, et dans lequel l'emplacement du second UE est donné par l'un du réseau cellulaire et du GPS,
le circuit de traitement est également conçu pour :
recevoir une pluralité d'emplacements à partir d'une pluralité de deuxièmes UE et sélectionner un emplacement à partir de la pluralité d'emplacements qui ont été partagés par un plus grand nombre de deuxièmes UE.

7. Noeud de réseau selon la revendication 6, dans lequel le circuit de traitement comprend un processeur, une interface réseau et une mémoire, toutes deux couplées au processeur, la mémoire contenant des instructions qui, lorsqu'elles sont exécutées, amènent le processeur à effectuer une opération de réception de la demande d'emplacement, de détermination de l'emplacement et d'envoi de l'emplacement déterminé.

8. Noeud de réseau selon la revendication 6,
dans lequel le second UE envoie une demande au réseau cellulaire concernant son emplacement après qu'un transfert du réseau cellulaire vers un réseau WIFI s'est produit.

9. Noeud de réseau selon l'une quelconque des revendications 6 à 8, dans lequel le premier UE n'a pas de GPS ou de carte SIM et/ou
dans lequel la demande d'emplacement est fournie par une trame de gestion dans un protocole de réseau local sans fil IEEE 802.11, et/ou
dans lequel les informations d'emplacement déterminé sont l'un d'une identification globale de cellule, CGI, d'une identification globale de cellule de réseau d'accès radio terrestre de système de télécommunications mobiles universel évolué, eCGI, et d'un emplacement géographique.

10. Noeud de réseau selon la revendication 6, dans lequel en outre le processeur :
diffuse la demande d'emplacement reçue dans un domaine du noeud de réseau ;
en réponse à la diffusion, reçoit des emplacements à partir de troisièmes UE connectés au noeud de réseau, les troisièmes UE ayant connaissance de leur emplacement ; et
sélectionne l'emplacement reçu à partir d'un plus grand nombre de troisièmes UE et, éventuellement,
dans lequel les troisièmes UE ont connaissance de leur emplacement à travers l'un d'un GPS ou d'un réseau cellulaire et/ou
dans lequel les emplacements reçus à partir des troisièmes UE sont inclus dans l'une d'une option d'en-tête pour un paquet de données IPv4 et d'une option d'en-tête étendue pour un paquet de données IPv6, et/ou
dans lequel le noeud de réseau est un point d'accès.
